# EUROPEAN PATENT APPLICATION

(11) **EP 0 889 634 A2**
(43) Date of publication of application: **07.01.1999**
(21) Application number: 98305734.0
(22) Date of filing: 06.07.1998
(51) Int. Cl.: H04N 1/00

(54) **Method and apparatus for detecting document size**

(30) Priority: 04.07.1997 KR 9730931
(71) Applicant: SAMSUNG ELECTRONICS Co. Ltd., Kyungki-do, Seoul (KR)
(72) Inventor: Han, Ji-hoon, Nowon-gu, Seoul (KR)
(74) Representative: Lunt, Mark George Francis

(57) **Abstract**

Disclosed is a method for detecting a document size when the width of a document to be scanned is smaller than an effective scan width of a scanner module. One block of a plate is scanned before a document to be scanned is fed and it is stored as a reference colour data value. After pre-scanning a first block of the document, it is successively compared and judged whether a colour data value corresponding to a first slice is the same as the reference colour data value. In the case that the colour data value of an optional slice is the same as the reference colour data value, the size corresponding to the position of a slice just before the optional slice is detected as the size of the document.

## Description

The present invention relates to a method and apparatus for detecting a document size and, more particularly, to a method for detecting a document size when the width of a document to be scanned is smaller than an effective or maximum scan width of a scanner module.

Nowadays, office automation facilities such as a printer, scanner and a facsimile are widely used. In order to extend the functions of such machines, each of the office automation facilities have been developed to have high performance and are thereby costly products to manufacture. On the other hand, to reduce a user's economic burden, the office automation facilities have been developed to combine integrally the functionality of many of the separate machines. Such a device is conventionally known as a multifunctional machine.

A multifunctional machine integrating a print head using an ink jet printing method and a scanner module of shuttle type is known.

The print head and the scanner module are established in one set, and print on a recording medium or scan a document by performing reciprocating motion along a same path. The travelling direction of the print head and scanner module is perpendicular to the direction of travel of the recording medium or the document being scanned. The print head and the scanner module are simultaneously moved by a motor.

As is well known within the art, a document to be scanned by the scanner module is supported by a document support plate. Conventionally, since a white roller is used as the support plate in a multifunctional machine having an array type scanner module, in the case of parts other than the scanned range, it is recognised as comprising no data.

However, in the shuttle type, since the print head and the scanner module are established in parallel in the direction in which they perform the reciprocating movement, it is possible for the supporting plate to be contaminated by ink sprayed from the print head.

Accordingly, if the supporting plate is contaminated the colour of the supporting plate may be processed as black. When scanning a document having a width which is smaller than the effective or maximum scan range of the scanner module, data is derived from parts other than the document and are deemed to be black or at least a colour other than white.

However, since black colour represents data in a black and white scanner, the amount of data to be processed increases accordingly. As a result, the scanning time increases accordingly. Similarly, in a colour scanner, since the black part is treated as a part having a certain information, the scanning time also increases.

In addition, processing useless data derived from a source other than the document requires more time when transmitting and receiving such data as, for example, fax data, and uses unnecessarily the ink or toner of a party who receives the data.

Therefore, it is an object of the present invention to provide a method for detecting a document size capable of efficiently processing a background other than the document when scanning the document having a width smaller than an effective scan width of a scanner module.

Accordingly, a first aspect of the present invention provides a method for detecting a document size comprising the steps of:
scanning a block of a supporting plate before a document to be scanned;
storing a scanned data value as a reference colour data value;
scanning a selectable block of the document;
determining whether or not a colour data value corresponding to a first slice of the selectable block in said document is the same as the reference colour data value; and
identifying the document size as corresponding to the position of a slice preceding the current slice in the case that a colour data value of a current slice is the same as said reference colour data value.

According to one embodiment of the present invention there is provided a method for processing a document in which, before feeding a document to be scanned, one block of a plate is scanned and it is stored as a reference colour data value. After pre-scanning a first block of the document, it is successively compared and judged whether a colour data value corresponding to a first slice is the same as the reference colour data value. In the case that the colour data value of an optional slice is the same as the reference colour data value, the size corresponding to the position of a slice just before the optional slice is detected as the size of the document.

This embodiment can be applied to the case that the document is fed being aligned with the left side end of the plate. A second aspect of the present invention provides a method for detecting a document size comprising the steps of:
scanning a block of a supporting plate before a document to be scanned;
storing a scanned data value as a reference colour data value;
scanning a selectable block of the document;
determining whether or not colour data values corresponding to each slice starting from a first slice of the selectable block of said document are the same as the reference colour data value; identifying a first position within the selected block the position of the slice where the colour data value of said first slice is the same as said reference colour data value; determining whether or not colour data values corresponding to each successive slice starting from a slice next to said first slice are the same as the reference colour data value;
identifying a second position within the selectable block just before a second slice for which the colour data value of the second slice is the same as said reference colour data value; and
detecting the document size as corresponding to the difference between said second position and first position.

According to another embodiment of the present invention, before a document to be scanned is fed, a block of a plate is scanned and it is stored as a reference colour data value. After pre-scanning a first block of the document, it is successively compared and determined whether colour data values corresponding to each slice including the first slice are not same as the reference colour data value. When the colour data value of the first slice is not the same as the reference colour data value, the position of the first slice is detected as a first position. Moreover, it is successively compared and judged whether colour data values corresponding to each slice excluding the first slice are the same as the reference colour data value. When the colour data value of a second slice is the same as the reference colour data value, the position of the slice just before the second slice is detected as a second position. Afterwards, the size corresponding to the difference between the second position and first position is detected as the document size.

By repeatedly performing the steps after the step of pre-scanning the document, the document size can be detected more accurately.

This embodiment can be applied to the case that the document is fed not being aligned with the left side end of the plate.

Preferably, the reference colour is a black, and the colour of the document is a white.

Embodiments of the present invention will now be described by way of example only with reference to the accompanying drawings in which:
Figure 1 is a block diagram illustrating the structure of a multifunctional machine to which the present invention can be applied;
Figure 2 is a schematic view illustrating a document having a width smaller than an effective or maximum scan width of the multifunctional machine;
Figure 3 is a flowchart illustrating a method for detecting a document size according to one aspect of the present invention; and
Figure 4 is a flowchart illustrating a method for detecting a document size according to another aspect of the present invention.

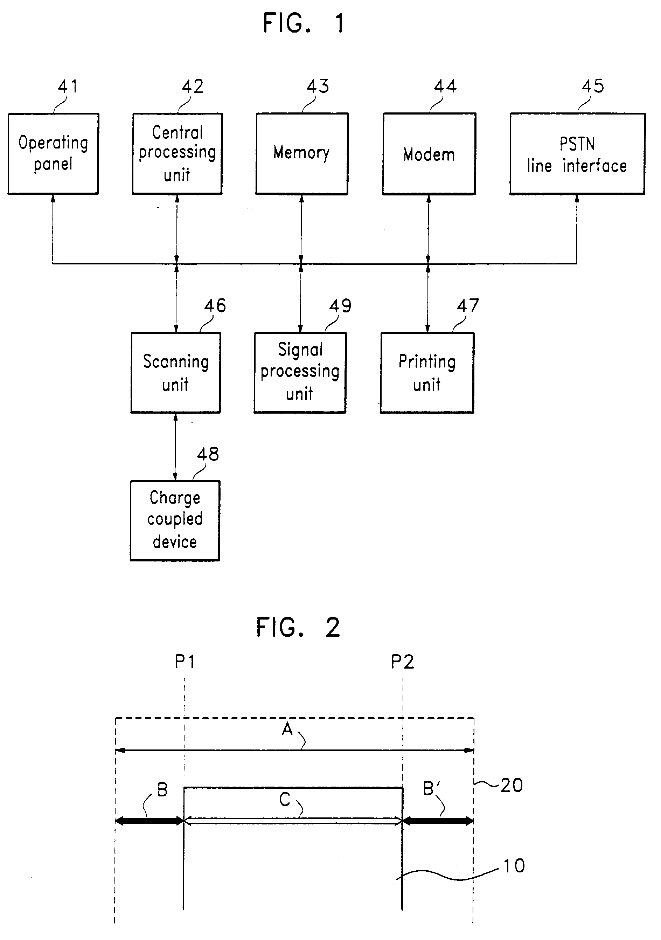

Figure 1 is a block diagram illustration the structure of a multifunctional machine to which the present invention can be applied.

The multifunctional machine includes a central processing unit 42 which controls a print head and a scanner module according to a certain program and calculates the size of a document through comparing data values obtained by scanning a document; a memory 43 stores program data, protocol data and graphical data under the control of the central processing unit 42; an operating panel 41 comprising a plurality of keys for generating key data allows the generated key data to be input into the central processing unit 42 and has a display unit for displaying display data output by, for example, the central processing unit 42; a charged coupled device (CCD) 48 which reads image data from the document photoelectrically converts the image data of the document and then outputs the photoelectrically converted image data; a scan unit 46 provides the photoelectrically converted image data output from the CCD 48 to the central processing unit 42; a modem 44 modulates output data of the central processing unit 42 to produce analogue data and demodulates received modulated analogue data and then outputs the demodulated data for further processing such as, for example, printing or display on a VDU, under the control of the central processing unit 42; a signal processing unit 49 encodes and decodes the image data output from the scanning unit 46 and the image data output from the modem 44; a PSTN line interface 45 provides a communication interface to, for example, a telephone line or other communication network under the control of the central processing unit 42 and acts as an interface between the modem 44 and the telephone line; and a print unit 47 printing the received data under the control of the central processing unit 42.

Referring to figure 2, there is shown a view of a document having a width smaller than the effective or maximum scan width of a multifunctional machine.

There is provided a supporting plate 20, having a black colour, with a width of A, and a document 10 having a width of C which is smaller than A. In a machine in which the document 10 is fed via some form of suitable feeder, the left hand side edge of the document 10 is conventionally aligned with the left side edge of the supporting plate 20. However, in some cases, the left edge of the document 10 and the left edge of the supporting plate 20 cannot be aligned each other. For example, as shown in figure 2, the document 10 is spaced apart by a distance B from the left side edge of the supporting plate 20 and by a distance B' from the right side edge of the supporting plate 20.

In the present embodiment, the situation in which the left side edge of the document 10 is/is not aligned with that of the supporting plate 20 will now be explained. For illustrative purposes only, the reference colour is defined as black, and-the document colour is defined as white.

However, in practical circumstances, the reference colour data value varies according to the colour of the supporting plate 20, and a document colour data value varies according to the colour of the document 10.

When scanning a document of A4 size having 2481 x 3507 dots in 300 DPI using the charged coupled device 48, the A4 size document is divided into 27 shuttle blocks in a first direction, preferably in the direction of transport of the document. Each of the shuttle block is divided into 2481 slices, i.e., 1^{st} to 2481^{st} slices in the direction perpendicular to the document transport direction. In other words, to scan the entire document, all the shuttle blocks can continuously be scanned in the document transport direction, and the 2481 slices of each block can be scanned continuously in the direction perpendicular to the document transport direction.

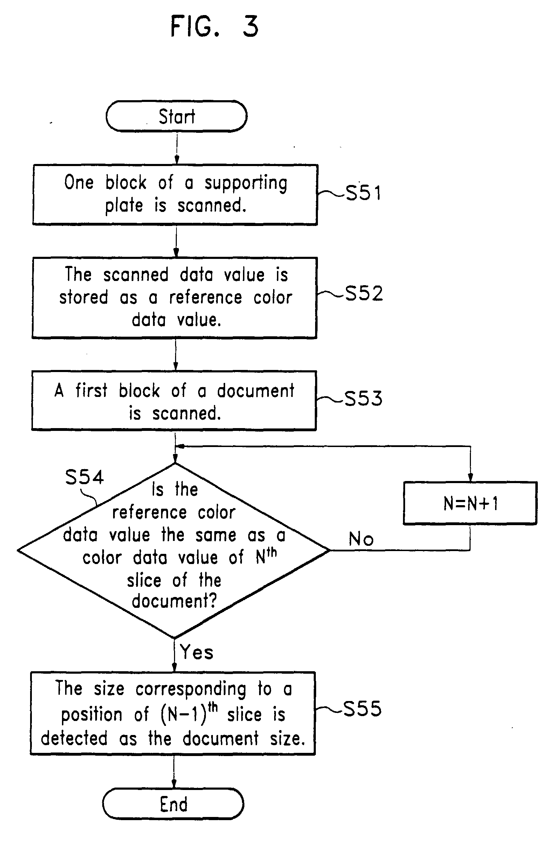

Figure 3 is a flowchart illustrating a method for detecting the document size according to one embodiment of the present invention.

Firstly, when a signal for starting the scanning operation is input, one block of the supporting plate 20 is scanned before the document 10 is fed (step 51). In the embodiment, the colour of the supporting plate 20 is black.

The scanned data value is stored in the memory 43 as the reference colour data value (step 52). That is, as the reference colour, the data value corresponding to the black colour is stored in the memory 43.

When the document 10 has been fed and is aligned with the left side edge of the supporting plate 20, the first block of the document 10 is pre-scanned (step 53).

Afterwards, selected slices of the scanned block are compared with the reference block to determine whether or not the colour data value corresponding to a first slice of a first block of the scanned document is the same as the reference colour data value stored in the memory 43 (step 54).

When the colour data value of a selected slice is determined to be the same as the reference colour data value, the size of the document is deemed to correspond to the position of the immediately preceding slice (step 55). In other words, "the colour data value of the relevant slice is the same as the reference colour data value" means that both colours are the same, and it means the position of the slice corresponds to a slice of the support plate 20. Accordingly, the size corresponding to the slice just before the current slice is determined to be the document size.

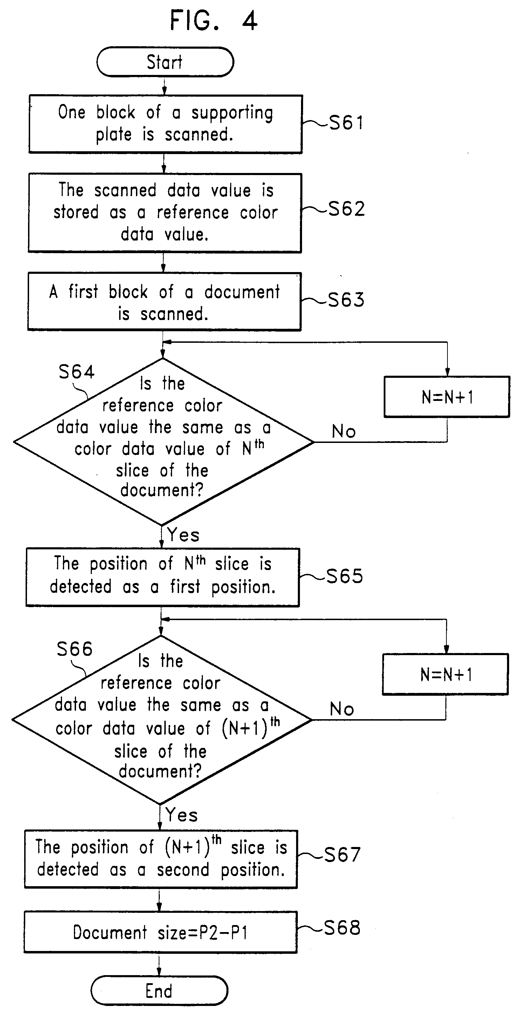

Referring to figure 4, there is shown a flowchart illustrating a method for detecting the document size according to another embodiment of the present invention.

Firstly, when a signal for starting the scanning operation is input, one block of the supporting plate 20 is scanned before the document 10 is fed (step 61). In the embodiment, the notional colour of the support plate 20 is for illustrative purposes black.

The scanned data value(s) are stored in the memory 43 as the reference colour data value(s) (step 62), that is, as the reference colour, the data value corresponding to the black colour is stored in the memory 43.

When the document 10 is fed, the first block of the document 10 is pre-scanned (step 63). At this time, assuming that left side edge of the document 10 being fed is not aligned with that of the supporting plate 20.

Afterwards, selectable slices of the scanned block are compared with the reference data value to determine whether or not the colour data values corresponding to each slice including a first slice of a first block of the scanned document are the same as the reference colour data value stored in the memory 43 (step 64).

When the colour data value of a current slice is not same as the reference colour data value, the position of the relevant slice is deemed to be the first position of the document (step 65), that is, 'the colour data value of the current slice is not the same as the reference colour data value' means that the position of the current slice is located at the left side edge of the document. Accordingly, the position of the current slice is detected as being the first position P1 corresponding to the left side edge of the document. Afterwards, a determination is made as to whether or not the colour data values corresponding to each slice starting from the next slice are the same as the reference colour data value (step 66).

When the colour data value of the current slice is the same as the reference colour data value, the position of a slice just before the current slice is deemed to be a second position P2 (step 67), that is, 'the colour data value of the current slice is the same as the reference colour data value' means that the position of the slice just before the current slice is located at the right side edge of the document. Accordingly, the position of the slice just before the relevant slice is detected as being the second position P2 which corresponds to the right side edge of the document.

Afterwards, the size corresponding to the difference between the second position P2 and the first position P1 is detected as being the document size (step 68), that is, since the first position P1 identifies the left side edge of the document and the second position P2 identifies the right side edge of the document, the document size corresponds to the difference between the two positions.

As described above, the colour data values are compared on a slice by slice basis. It is also possible to compare the values using some other unit of comparison. Moreover, in actual circumstances, since data having the same value as the reference colour data value can exist within the document, slice positions at the centre of the document can be mistaken as being the position of left side edge or right side edge during any such comparison of the data on a slice by slice basis. Accordingly, by pre-scanning the entire document using the above method, a more exact result can be obtained.

According to the above method, since the size of the document which is fed into the machine is detected, it is possible not to process data which does not correspond to the document or to control the movement of the scanner module.

When data processing is not performed in relation to data other than that derived from the document, the amount of data to be processed decreases and data processing speed increases accordingly. For example, in the case of transmitting the scanned data via fax, the data transmission time is reduced.

Moreover, after defining the first position as the left side edge and the second position as the right side edge based on the detected first and second positions and then controlling the scanner module to reciprocate between the two positions, the scanning time can be reduced.

While there have been illustrated and described what are considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims.

## Claims

1. A method for detecting a document size comprising the steps of:
scanning a block of a supporting plate before a document to be scanned;
storing a scanned data value as a reference colour data value;
scanning a selectable block of the document;
determining whether or not a colour data value corresponding to a first slice of the selectable block in said document is the same as the reference colour data value; and
identifying the document size as corresponding to the position of a slice preceding the current slice in the case that a colour data value of a current slice is the same as said reference colour data value.

2. A method as claimed in claim 1, wherein said reference colour is black and the colour of said document is white.

3. A method as claimed in any preceding claim, further comprising the step of aligning the document with the left side edge of the supporting plate.

4. A method for detecting a document size comprising the steps of:
scanning a block of a supporting plate before a document to be scanned;
storing a scanned data value as a reference colour data value;
scanning a selectable block of the document;
determining whether or not colour data values corresponding to each slice starting from a first slice of the selectable block of said document are the same as the reference colour data value;
identifying a first position within the selected block the position of the slice where the colour data value of said first slice is the same as said reference colour data value;
determining whether or not colour data values corresponding to each successive slice starting from a slice next to said first slice are the same as the reference colour data value;
identifying a second position within the selectable block just before a second slice for which the colour data value of the second slice is the same as said reference colour data value; and
detecting the document size as corresponding to the difference between said second position and first position.

5. A method as claimed in claim 4, further comprising the steps of scanning the selectable block are repeatedly performed for each document block over the entire document.

6. A method as claimed in either of claims 4 or 5, wherein said document is not aligned with the left side end of said supporting plate.

7. A method as claimed in any preceding claim, further comprising the step of
selecting the selectable block as being the first block of the document.

8. Apparatus for detecting a document size comprising means for scanning a block of a supporting plate before a document to be scanned;
means for storing a scanned data value as a reference colour data value;
means for scanning a selectable block of the document;
means for determining whether or not a colour data value corresponding to a first slice of the selectable block in the document is the same as the reference colour data value; and
means for identifying document size as corresponding to the position of a slice preceding a current slice if a colour data value of the current slice is the same as the reference colour data value.

9. Apparatus as claimed in claim 8, wherein the reference colour is black and the colour of the document is white.

10. Apparatus as claimed in either of claims 8 or 9, further comprising means for aligning the document with the left side edge of the supporting plate.

11. Apparatus for detecting a document size comprising means for scanning a block of a supporting plate before the document to be scanned;
means for storing a scanned data value as a reference colour data value;
means for scanning a selectable block of the document;
means for determining whether or not colour data values corresponding to each slice starting from the first slice of the selectable block of the document are the same as the reference colour data value;
means for identifying a first position within the selectable block if the colour data value of the first slice is the same as the reference colour data value;
means for determining whether or not colour data values corresponding to each successive slice starting from a slice next to the first slice are the same as the reference colour data value;
means for identifying a second position within the selective block just before a second slice if a colour data
value of the second slice is the same as the reference colour data value; and
means for detecting the document size as corresponding to the difference between the second position and the first position.

12. Apparatus as claimed in claim 11, further comprising means for repeatedly performing the above steps for each block of the document.

13. Apparatus as claimed in either of claim 11 or 12, wherein the document being scanned is not aligned with the left side edge of the supporting plate.

14. Apparatus as claimed in any of claims 8 to 13 further comprising means for selecting the selectable block as being the first block of the document.
